# EUROPEAN PATENT SPECIFICATION

(11) **EP 4 084 447 B1**
(45) Date of publication and mention of the grant of the patent: **07.05.2025**
(21) Application number: 21764215.6
(22) Date of filing: 02.03.2021
(51) Int. Cl.: H04M 1/03, H04M 1/02

(54) **ELECTRONIC DEVICE**
ELEKTRONISCHE VORRICHTUNG
DISPOSITIF ÉLECTRONIQUE

(30) Priority: 05.03.2020 CN 202010146924
(43) Date of publication of application: 02.11.2022
(73) Proprietor: Huawei Technologies Co., Ltd., Shenzhen, Guangdong 518129 (CN)
(72) Inventor: ZHANG, Tienan, Shenzhen, Guangdong 518129 (CN); XU, Chao, Shenzhen, Guangdong 518129 (CN); ZHANG, Yuguo, Shenzhen, Guangdong 518129 (CN); WANG, Chuanguo, Shenzhen, Guangdong 518129 (CN); ZHANG, Cheng, Shenzhen, Guangdong 518129 (CN)
(74) Representative: Pfenning, Meinig & Partner mbB
(86) International application number: PCT/CN2021/078645
(87) International publication number: WO 2021/175205

(56) References cited:
- CN-A- 104 243 639
- CN-A- 105 219 286
- CN-A- 110 475 002
- CN-A- 110 475 002
- CN-A- 110 677 792
- CN-U- 202 721 718
- CN-U- 206 408 154
- CN-U- 207 427 223
- JP-A- 2013 219 583
- JP-A- 2014 099 823
- US-A1- 2018 159 097
- US-B1- 9 909 035

## Description

### TECHNICAL FIELD

This application relates to the terminal device manufacturing field, and in particular, to an electronic device.

### BACKGROUND

A speaker box of a mobile phone determines a speaker effect of the mobile phone. To achieve sound effects such as high volume and stereo, a rear acoustic cavity of the speaker box is connected to an inner cavity of the mobile phone, so that the inner cavity of the mobile phone is also used as the rear acoustic cavity of the speaker box. However, with this design of an open rear acoustic cavity, when the speaker box works, a vibrating diaphragm drives air in the inner cavity of the mobile phone to vibrate; and consequently, an air flow impacts a rear housing of the mobile phone, and the rear housing vibrates. When touching the rear housing, a user can clearly feel vibration of the housing. Especially, when the speaker box works at a low frequency band, the user can even feel numb on hands. This affects user experience.

CN 206408154 describes a waterproof strong and weak glue based on steep cotton substrate.

US 9909035 describes a dual-adhesive double-sided adhesive tape, having a first double-sided tape that includes a first adhesive on each side of a first support and a second double-sided tape that has a second adhesive on each side of a second support.

CN 110475002 describes electronic equipment comprising a housing which defines an internal cavity; a packer which is arranged in the internal cavity and divides the internal cavity into a sounding cavity; and a loudspeaker assembly which is arranged in the sound production cavity, the loudspeaker assembly comprises a front shell and a loudspeaker positioned in the front shell, the loudspeaker and the front shell jointly define a front sound cavity of the loudspeaker assembly, and the sound production cavity serves as a rear sound cavity of the loudspeaker assembly.

US 2018/159097 describes a detachable structure of a battery to be attached to a case that includes a wrapping of the battery and a housing of the case.

CN 110677792 describes electronic equipment comprising a battery cover, a middle frame assembly, a battery assembly and an electroacoustic assembly, the middle frame assembly is connected with the battery cover along a first direction; the middle frame assembly comprises a middle frame and a display screen arranged on the middle frame, the battery assembly is arranged between the middle frame assembly and the battery cover so as to define a closed cavity together with the middle frame assembly and the battery cover, the battery assembly is connected with the display screen, and the electroacoustic assembly is arranged in the cavity so that the cavity can form a rear cavity of the electroacoustic assembly.

### SUMMARY

This application provides an electronic device, an auxiliary material of the electronic device, and a rear housing assembly of the electronic device, so that vibration of a housing caused by working of a speaker box can be suppressed, and user experience can be optimized.

According to a first aspect, this application provides an electronic device. The electronic device includes a rear housing, a middle frame, a functional component, a speaker box, and an auxiliary material, where the rear housing covers the middle frame and forms a mounting cavity together with the middle frame, the functional component, the speaker box, and the auxiliary material are all disposed in the mounting cavity, the functional component is adjacent to the speaker box, a rear acoustic cavity of the speaker box is connected to the mounting cavity, the auxiliary material is bonded between the rear housing and the functional component, the auxiliary material has a weak-adhesion surface and a strong-adhesion surface that are opposite to each other, adhesive force of the weak-adhesion surface is less than adhesive force of the strong-adhesion surface, the weak-adhesion surface is bonded to the functional component, and the strong-adhesion surface is bonded to the rear housing.

The electronic device may be a non-foldable electronic device, or may be a foldable electronic device. The non-foldable electronic device includes one middle frame and one rear housing. The foldable electronic device may include two middle frames and two rear housings, one middle frame and one rear housing form one mounting cavity, and the other middle frame and the other rear housing form the other mounting cavity. The auxiliary material and the functional component are in a same mounting cavity, and a speaker may be in either mounting cavity.

The functional component is a component, other than the speaker box, that is mounted in the mounting cavity. The functional component may have a specific mechanical function (including but not limited to supporting, limiting, accommodation, connection, and cooperation), an electrical function (including but not limited to an electrical connection, charging and discharging, signal radiation, electromagnetic shielding, signal processing, filtering, image collection, fingerprint information collection, and audio collection), and/or another function (a thermochemistry function such as heat dissipation).

The speaker box may include a speaker housing and a speaker unit. The speaker housing has an inner cavity. A front acoustic cavity sound outlet hole and a communication hole are disposed on the speaker housing, the front acoustic cavity sound outlet hole is separated from the communication hole, the front acoustic cavity sound outlet hole is aligned with an entire-system sound outlet hole on the middle frame, and the communication hole is connected to the mounting cavity. The speaker unit is mounted in the inner cavity, and divides the inner cavity into a front acoustic cavity and a rear acoustic cavity that are isolated from each other. The front acoustic cavity is connected to the front acoustic cavity sound outlet hole, and the rear acoustic cavity is connected to the communication hole. The speaker unit is configured to implement electrical-acoustical conversion to make a sound. A sound wave generated by the speaker unit is transmitted to the outside of the electronic device through the front acoustic cavity, the front acoustic cavity sound outlet hole, and the entire-system sound outlet hole, to be received by a human ear to form auditory sense. The rear acoustic cavity of the speaker box is connected to the mounting cavity of the electronic device by using the communication hole. This is the design of an open rear acoustic cavity. In such a design of an open rear acoustic cavity, the mounting cavity is expanded into the rear acoustic cavity of the speaker box, so that sound effects such as high volume and stereo can be implemented, and sound quality performance of the speaker box is enhanced.

The auxiliary material may be in a sheet shape, and a surface of the auxiliary material may be closed and complete without holes, or a through-hole may be disposed as required. Appearance of the auxiliary material may match appearance of the functional component, to ensure proper bonding strength for the functional component. The adhesive force is used to represent strength of adhesion, and adhesion of the weak-adhesion surface of the auxiliary material is weaker than adhesion of the strong-adhesion surface. Based on this design, when the rear housing is detached for maintenance, the auxiliary material is easily separated from the functional component, and is detached together with the rear housing, so that the functional component is not pulled or damaged, and no glue remains. This not only reduces detaching difficulty, but also helps implement reuse of the functional component.

Because the rear housing is bonded to the functional component inside the rear housing by using the auxiliary material, equivalent quality and rigidity of the rear housing are increased, and resonance frequency of the rear housing is changed. Therefore, when an air flow caused by working of the speaker box impacts the rear housing, the rear housing is not prone to vibration.

In an implementation, the auxiliary material includes an adhesive layer, a foam layer, and a double-sided tape layer that are sequentially stacked, the adhesive layer is bonded to the functional component, the weak-adhesion surface is a surface on which the adhesive layer is bonded to the functional component, the double-sided tape layer is bonded to the rear housing, and the strong-adhesion surface is a surface on which the double-sided tape layer is bonded to the rear housing.

The adhesive layer, the foam layer, and the double-sided tape layer are stacked and bonded to form a sheet structure. The foam layer is sandwiched between the adhesive layer and the double-sided tape layer. Shapes of the adhesive layer, the foam layer, and the double-sided tape layer are consistent, and the adhesive layer, the foam layer, and the double-sided tape layer completely overlap. In a thickness direction of the adhesive layer, materials in the adhesive layer may be uniformly distributed. Therefore, adhesive force of any cross section (a normal direction of the cross section is the thickness direction) in the adhesive layer is equal to adhesive force of the entire adhesive layer. For example, adhesive force of the weak-adhesion surface of the adhesive layer may be the same as adhesive force of a surface on which the adhesive layer is bonded to the foam layer. In this solution, when the rear housing is detached, the foam layer and the double-sided tape layer may be detached together with the rear housing, and the adhesive layer is still bonded to the functional component. However, because adhesive force of the weak-adhesion surface for the functional component is relatively small, the adhesive layer may be torn off the functional component without pulling or damaging the functional component, and no glue remains on the functional component. Alternatively, in the thickness direction of the adhesive layer, materials in the adhesive layer may be non-uniformly distributed, and adhesive force of the weak-adhesion surface may be less than adhesive force of a surface on which the adhesive layer is bonded to the foam layer.

The foam layer is made of foam. The foam layer is easily compressed to generate elastic deformation and compression rebound force. The double-sided tape layer is made of a double-sided tape, and both two surfaces of the double-sided tape layer in a thickness direction have relatively strong adhesion.

Because the foam is prone to elastic deformation, the auxiliary material also has elastic deformation performance. When a gap tolerance between the functional component and the rear housing exceeds a design range due to a manufacturing error, the auxiliary material can be adaptively deformed to pad a gap between the functional component and the rear housing, to ensure that the functional component and the rear housing can be reliably assembled; in other words, the auxiliary material can adapt to the gap tolerance between the functional component and the rear housing. In addition, the rear housing can be firmly bonded by using the double-sided tape layer, and material costs are low and productivity is high. Through design of the adhesive layer with relatively low adhesive force for the functional component, it can be ensured that the auxiliary material is easily separated from the functional component and has relatively high manufacturability and productivity.

In an implementation, the adhesive layer includes a weak-adhesion layer, a substrate layer, and a strong-adhesion layer that are sequentially stacked. The weak-adhesion layer is bonded to the functional component, the weak-adhesion surface is a surface on which the weak-adhesion layer is bonded to the functional component, the strong-adhesion layer is bonded to the foam layer, and the adhesive force of the weak-adhesion surface is less than adhesive force of the strong-adhesion layer.

In the thickness direction of the adhesive layer, materials in the weak-adhesion layer and the strong-adhesion layer are uniformly distributed, and adhesive force of any cross section (a normal line of the cross section extends in the thickness direction) in the weak-adhesion layer is equal to adhesive force of an entire material layer, and this is also true for the strong-adhesion layer. Adhesion of the weak-adhesion layer is not only less than that of the double-sided tape layer but also less than that of the strong-adhesion layer. A relationship between the adhesive force of the strong-adhesion layer and the adhesive force of the double-sided tape layer may be not limited. For example, the adhesive force of the strong-adhesion layer and the adhesive force of the double-sided tape layer may be basically consistent; the adhesive force of the strong-adhesion layer is less than the adhesive force of the double-sided tape layer; or the adhesive force of the strong-adhesion layer is greater than the adhesive force of the double-sided tape layer. The adhesive layer of this structure can not only be bonded to the functional component, but can also meet a detachable maintenance requirement for a product, and can ensure manufacturability and productivity of the adhesive layer.

In an implementation, the adhesive force of the weak-adhesion layer is less than or equal to 0.0392 N/cm, and/or the adhesive force of the strong-adhesion layer is greater than or equal to 5 N/cm. The weak-adhesion layer in this design can be bonded to the functional component, and can also meet a detachable maintenance requirement for a product. The strong-adhesion layer in this design can be reliably bonded to the rear housing, to connect the rear housing and the functional component together, so that vibration of the housing is suppressed.

In an implementation, the weak-adhesion layer is made from silica gel, the substrate layer is made from polyethylene terephthalate or poly-ether-ether-ketone, and the strong-adhesion layer is made from an acrylic double-sided tape, an acrylic tape, or a foam tape. Material selection for the weak-adhesion layer, the substrate layer, and the strong-adhesion layer is independent of each other and does not affect each other, and a proper material may be selected for any one of the weak-adhesion layer, the substrate layer, and the strong-adhesion layer as required.

In an implementation, impact absorptivity of the adhesive layer is greater than or equal to 35%. As a whole, the adhesive layer may further have specific damping performance, and can absorb impact energy, to have a specific function of suppressing vibration of the housing. The damping performance may be represented by the impact absorptivity. The impact absorptivity represents a ratio of energy absorbed by a material to total energy. The adhesive layer with this level of the impact absorptivity has good damping performance, so that vibration of the rear housing can be further reduced.

In an implementation, density of the foam layer is less than or equal to 100 Kg/*m*³. Lower density of the foam layer leads to a larger possibility of compressive deformation and lower compression rebound force that can be provided. The density of the foam layer is enabled to fall within this range, so that a case in which the rear housing is lifted and consequently a gap between the rear housing and the middle frame is excessively large because compression rebound force of the foam layer is excessively large can be avoided.

In an implementation, several spaced-apart through-holes are disposed on the auxiliary material, and each through-hole penetrates the adhesive layer, the foam layer, and the double-sided tape layer. Sizes, quantities, shapes, and an arrangement manner of the through-holes are not limited. Disposing the through-hole can reduce a bonding area between the auxiliary material and both the rear housing and the functional component, and further reduce adhesive force of the auxiliary material and compression rebound force (that is, pre-tightening force) applied by the auxiliary material to the rear housing, so that the rear housing can be more easily detached, and the gap between the rear housing and the middle frame is prevented from being excessively large.

In an implementation, the functional component includes a battery. For the battery, in this solution, the battery and the rear housing are united by using the auxiliary material, so that not only vibration of the housing can be suppressed, but an assembly gap of the battery can also be met. In particular, when the battery is an expandable pouch cell battery, the auxiliary material can be compressed to provide structural space required for expansion of the battery, to avoid a case in which the rear housing is lifted after the battery is expanded and consequently the gap between the rear housing and the middle frame is excessively large and an appearance defect of an entire system is caused.

In an implementation, an outline boundary of the auxiliary material does not exceed an outline boundary of the battery. A boundary of the auxiliary material may be completely retracted within a boundary of the battery. In this case, the auxiliary material and the battery may approximately share a center, and a spacing between each side of the auxiliary material and each corresponding side of the battery may be approximately equal. Alternatively, the boundary of the auxiliary material and the boundary of the battery may basically overlap. This design can ensure that the auxiliary material has a proper bonding area and ensure that adhesive force for the battery is in a proper range, and can also meet an internal structure design requirement of the electronic device.

### BRIEF DESCRIPTION OF DRAWINGS

FIG. 1 is a schematic diagram of a three-dimensional structure of an electronic device according to Embodiment 1;
FIG. 2 is a schematic diagram of an exploded structure of the electronic device in FIG. 1;
FIG. 3 is a schematic diagram of an A-A cross-sectional structure of the electronic device in FIG. 1;
FIG. 4 is a schematic diagram of a partial enlarged structure of a location B in FIG. 3;
FIG. 5 is a schematic diagram of a side-view structure of an electronic device according to Embodiment 2;
FIG. 6 is a schematic diagram of an exploded structure of the electronic device in FIG. 5;
FIG. 7 is a schematic diagram of an exploded structure of an assembling relationship of a battery, an auxiliary material, and a rear housing according to Embodiment 1;
FIG. 8 is a schematic diagram of a cross-sectional structure of an adhesive layer of an auxiliary material in FIG. 7;
FIG. 9 shows amplitude data of a rear housing in a conventional solution;
FIG. 10 shows amplitude data of a rear housing in a solution of Embodiment 1;
FIG. 11 is a schematic diagram of an exploded structure of an auxiliary material according to Embodiment 3; and
FIG. 12 is a schematic diagram of a top-view structure of another auxiliary material according to Embodiment 3.

### DESCRIPTION OF EMBODIMENTS

An electronic device is provided in the following embodiments of this application. The electronic device includes but is not limited to a mobile phone, a tablet computer, an electronic reader, and the like. A mobile phone is used as an example of the electronic device below for description.

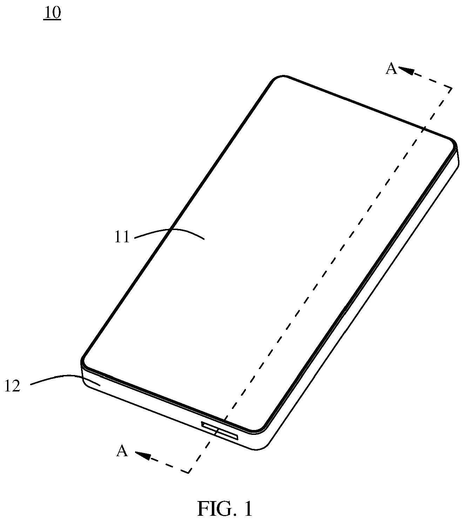

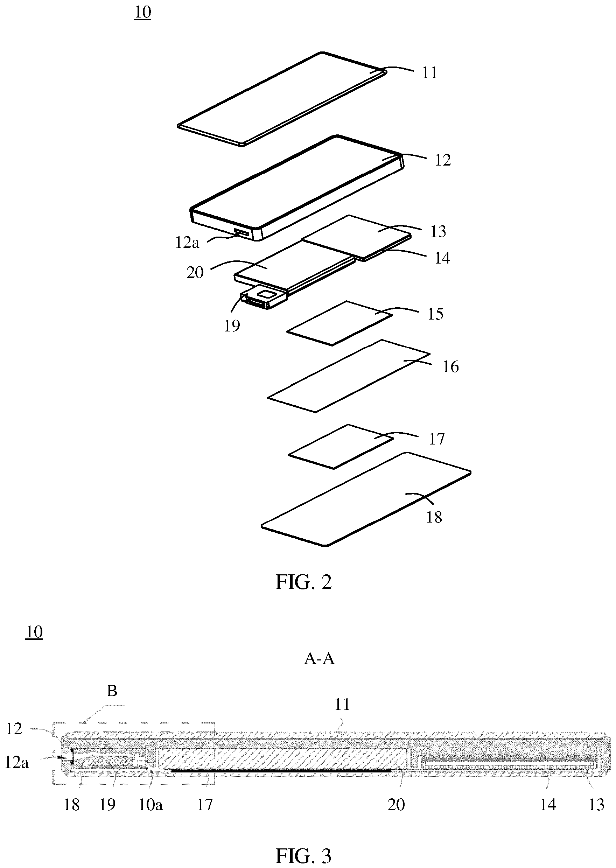

As shown in FIG. 1 to FIG. 3 (FIG. 3 is an A-A cross-sectional view of FIG. 1), in Embodiment 1, an electronic device 10 may include a display 11, a middle frame 12, a speaker box 19, a battery 20, a circuit board assembly, a graphite sheet 15, a charging coil 16, an auxiliary material 17, and a rear housing 18.

As a main structural bearer of the electronic device 10, the middle frame 12 is configured to bear the foregoing components except the middle frame 12. Mounting slots may be formed on both opposite sides of the middle frame 12, the display 11 is mounted in a mounting slot on one side of the middle frame 12, and the speaker box 19, the battery 20, the circuit board component, the graphite sheet 15, and the charging coil 16 are mounting in a mounting slot on the other side of the middle frame 12. The rear housing 18 covers the middle frame 12, and is located on a side that is of the middle frame 12 and that is away from the display 11. The middle frame 12 and the rear housing 18 may form a mounting cavity 10a, and the speaker box 19, the battery 20, the circuit board assembly, the graphite sheet 15, the charging coil 16, and the auxiliary material 17 are all located in the mounting cavity 10a. As shown in FIG. 1 and FIG. 2, an entire-system sound outlet hole 12a may be formed on a side wall of the middle frame 12, and the entire-system sound outlet hole 12a penetrates the side wall. In another embodiment, the entire-system sound outlet hole 12a may alternatively be disposed on the rear housing 18. Specific structures of the middle frame 12 and the rear housing 18 may be designed according to a product requirement, and are not limited in Embodiment 1.

The display 11 may be a planar 2D screen, or may be a curved screen such as a 2.5D screen (the display 11 has a flat middle part and curved parts that are on two opposite sides and that are connected to the middle part) or a 3D screen (the middle part is also formed as a curved face on a basis of the 2.5D screen). The display 11 may include a cover plate and a display panel, and the cover plate are the display panel are stacked. The cover plate is configured to protect the display panel, and the display panel is configured to display an image. The display panel includes but is not limited to a liquid crystal display panel or an organic light emitting diode display panel. The cover plate may be integrated with a touch control unit; in other words, the cover plate has a touch control function. Alternatively, a touch control unit may be built in the display panel; in other words, the display panel has both a display function and a touch control function.

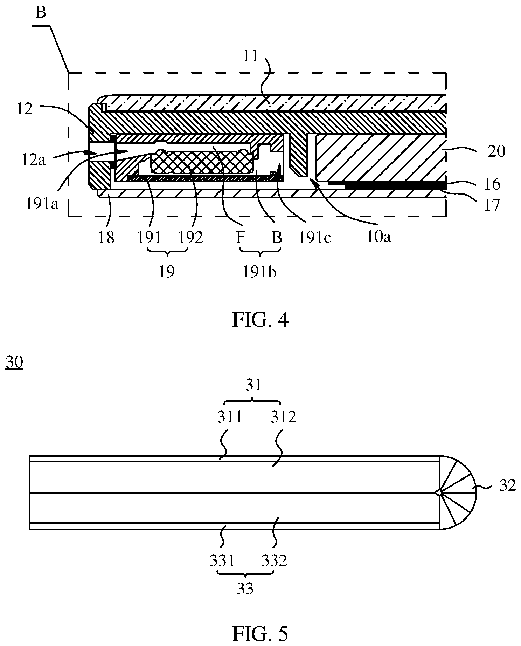

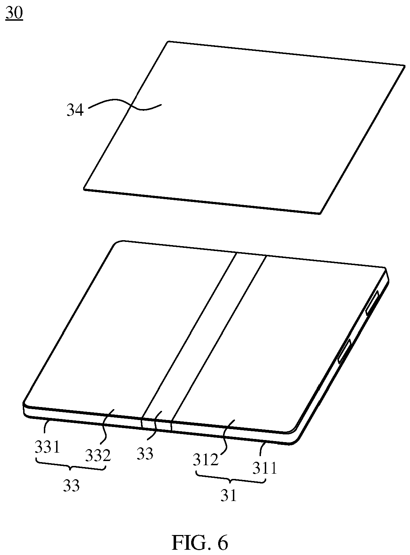

As shown in FIG. 1 and FIG. 2, the electronic device 10 in Embodiment 1 is a non-foldable mobile phone, and may include the middle frame 12 and the rear housing 18, and the display 11 of the electronic device 10 is a non-foldable hard screen. As shown in FIG. 5 and FIG. 6, different from Embodiment 1, in Embodiment 2, an electronic device 30 is a foldable mobile phone and may include two middle frames and two rear housings, and a display 34 of the electronic device 30 is a flexible screen that can be bent.

Specifically, from a view in FIG. 6, a first middle frame 312 and a first rear housing 311 on the left side are assembled into a first housing 31, and a second middle frame 332 and a second rear housing 331 on the right side are assembled into a second housing 33. A manner of assembling the first middle frame 312 and the first rear housing 311 and a manner of assembling the second middle frame 332 and the second rear housing 331 are the same as those in Embodiment 1. The first housing 31 is rotatably connected to the second housing 32 by using a hinge 32. The hinge 32 may be a mechanism including several components, and can generate mechanism motion. Through the mechanism motion of the hinge 32, the first housing 31 and the second housing 32 can approach each other or be separated, to fold or unfold a foldable mobile phone. The display 34 is mounted on a same side of the first middle frame 312 and the second middle frame 332. As shown in FIG. 5 and FIG. 6, when the foldable mobile phone is in a folded state, the display 34 may be accommodated between the first housing 31 and the second housing 32; in other words, the foldable mobile phone is a mobile phone with an inward-folding screen. In another embodiment, when the foldable mobile phone is in a folded state, the display is on an outer side, and the first housing and the second housing are on an inner side; in other words, the foldable mobile phone may be a mobile phone with an outward-folding screen.

In Embodiment 2, a speaker box, a battery, a circuit board component, a graphite sheet, a charging coil, and an auxiliary material may be mounted in the first housing or the second housing as required. For example, the speaker box, the battery, the circuit board component, the graphite sheet, the charging coil, and the auxiliary material are all mounted in the first housing or the second housing; the speaker box, the battery, the graphite sheet, the charging coil, and the auxiliary material are mounted in the first housing, and the circuit board component is mounted in the second housing; the speaker box is mounted in the first housing, the battery, the graphite sheet, the charging coil, and the auxiliary material are mounted in the second housing, and the circuit board module is mounted in the first housing or the second housing; or the speaker box, the battery, the circuit board component, the graphite sheet, the charging coil, and the auxiliary material are mounted in both the first housing and the second housing. It should be understood that the foregoing descriptions are examples, and actual mounting locations of the foregoing components are not limited thereto.

Solutions of embodiments of this application continue to be described below by using the electronic device 10 in Embodiment 1 as an example.

As shown in FIG. 2 and FIG. 3, the circuit board component may be arranged in parallel to the battery 20 and the speaker box 19. The circuit board component may include a circuit board 13 and a circuit board bracket 14. The circuit board 13 is electrically connected to the battery 20, the speaker box 19, and the charging coil 16. The circuit board bracket 14 may be mounted on a surface that is of the circuit board 13 and that faces the rear housing 18, and the circuit board bracket 14 may be configured to support, limit, and protect the circuit board 13. In another embodiment, a relative location of the circuit board component to the battery 20 and the speaker box 19 may be designed according to a product requirement, and is not limited to that in FIG. 2 and FIG. 3. Based on product stacking design and structure design requirements, the circuit board bracket 14 may alternatively not be disposed.

As shown in FIG. 2 and FIG. 3, the battery 20, the graphite sheet 15, and the charging coil 16 are sequentially stacked. The battery 20 may be far away from the rear housing 18, the charging coil 16 may be close to the rear housing 18, and the graphite sheet 15 may be located between the battery 20 and the charging coil 16 (the graphite sheet 15 and the charging coil 16 are not shown in FIG. 3). The battery 20 may be a battery that can be inserted/plugged and replaced by a user, or a battery (such as a pouch cell battery) that cannot be inserted/plugged or replaced by the user. The battery 20 is mounted on the middle frame 12, for example, is fastened to the middle frame 12 through clamping or bonding. There may be a gap between the graphite sheet 15 and the battery 20. The graphite sheet 15 is configured to dissipate heat for a heat generating element in the mounting cavity 10a, for example, may dissipate heat for a chip on the circuit board 13, the speaker box 19, the battery 20, and the like. The charging coil 16 is electrically connected to the circuit board 13, and is configured to implement wireless charging of the battery 20. Specific structures and types of the battery 20, the graphite sheet 15, and the charging coil 16 are not limited in Embodiment 1. In another embodiment, the graphite sheet 15 and/or the charging coil 16 may be canceled; in other words, the graphite sheet 15 does not need to be used for heat dissipation, and the battery 20 may be charged by using a wired charging interface.

The battery 20, the graphite sheet 15, and the charging coil 16 are all functional components. The functional component is a component, other than the speaker box 19, that is mounted in the mounting cavity 10a. The functional component may have a specific mechanical function (including but not limited to supporting, limiting, accommodation, connection, and cooperation), an electrical function (including but not limited to an electrical connection, charging and discharging, signal radiation, electromagnetic shielding, signal processing, filtering, image collection, fingerprint information collection, and audio collection), and/or another function (a thermochemistry function such as heat dissipation). In addition to the battery 20, the graphite sheet 15, and the charging coil 16, the functional component may further include, for example, a camera module, a fingerprint module, a vibration motor, an antenna radiator, a shielding case/shielding frame, and an auxiliary circuit board. The two functional components, namely, the battery 20 and the charging coil 16, are further described below, but the following descriptions are actually applicable to any functional component.

As shown in FIG. 2 and FIG. 3, the speaker box 19 may be adjacent to the battery 20. With reference to FIG. 3 and FIG. 4, the speaker box 19 may include a speaker housing 191 and a speaker unit 192. The speaker housing 191 has an inner cavity 191b. A front acoustic cavity sound outlet hole 191a and a communication hole 191c are disposed on the speaker housing 191, the front acoustic cavity sound outlet hole 191a is isolated from the communication hole 191c, the front acoustic cavity sound outlet hole 191a is aligned with an entire-system sound outlet hole 12a on the middle frame 12, and the communication hole 191c is connected to the mounting cavity 10a. The speaker unit 192 is mounted in the inner cavity 191b, and divides the inner cavity 191b into a front acoustic cavity F and a rear acoustic cavity B that are isolated from each other. The front acoustic cavity F is connected to the front acoustic cavity sound outlet hole 191a, and the rear acoustic cavity B is connected to the communication hole 191c. The speaker unit 192 includes a vibrating diaphragm, and the speaker unit 192 is configured to implement electrical-acoustical conversion to make a sound. A sound wave generated by the speaker unit 192 is transmitted to the outside of the electronic device 10 through the front acoustic cavity F, the front acoustic cavity sound outlet hole 191a, and the entire-system sound outlet hole 12a, to be received by a human ear to form auditory sense. The rear acoustic cavity B of the speaker box 19 is connected to the mounting cavity 10a of the electronic device 10 by using the communication hole 191c. In such a design of an open rear acoustic cavity, the mounting cavity 10a is expanded into the rear acoustic cavity of the speaker box 19, so that sound effects such as high volume and stereo can be implemented, and sound quality performance of the speaker box 19 is enhanced. A specific structure of the speaker box 19 may be designed according to a product requirement, and is not limited in Embodiment 1.

As shown in FIG. 2 to FIG. 4, the auxiliary material 17 may be in a sheet shape, and a surface of the auxiliary material 17 is closed and complete, and no hole is disposed. The auxiliary material 17 is padded between the charging coil 16 and the rear housing 18, and is located in an area in which the battery 20 is located. One surface of the auxiliary material 17 is bonded to an inner surface of the rear housing 18, and an opposite surface is bonded to the charging coil 16. Appearance of the auxiliary material 17 may be designed according to the following principle: An area in which the auxiliary material 17 overlaps the battery 20 is made as large as possible, to ensure adhesive force for the area in which the battery 20 is located. For example, a shape of the auxiliary material 17 may be basically the same as that of the battery 20, and the auxiliary material 17 is approximately in a rectangular sheet shape. A boundary outline of the auxiliary material 17 may not exceed a boundary outline of the battery 20. For example, a boundary of the auxiliary material 17 is completely retracted within a boundary of the battery 20. In this case, the auxiliary material 17 may approximately share a center with the battery 20, and a spacing between each side of the auxiliary material 17 and each corresponding side of the battery 20 may be approximately equal. Alternatively, the boundary of the auxiliary material 17 basically overlaps the boundary of the battery 20. In another embodiment, appearance of the auxiliary material 17 may be designed according to a product requirement, so that the appearance of the auxiliary material 17 matches a functional component to which the auxiliary material 17 is bonded. This is not limited to the foregoing descriptions.

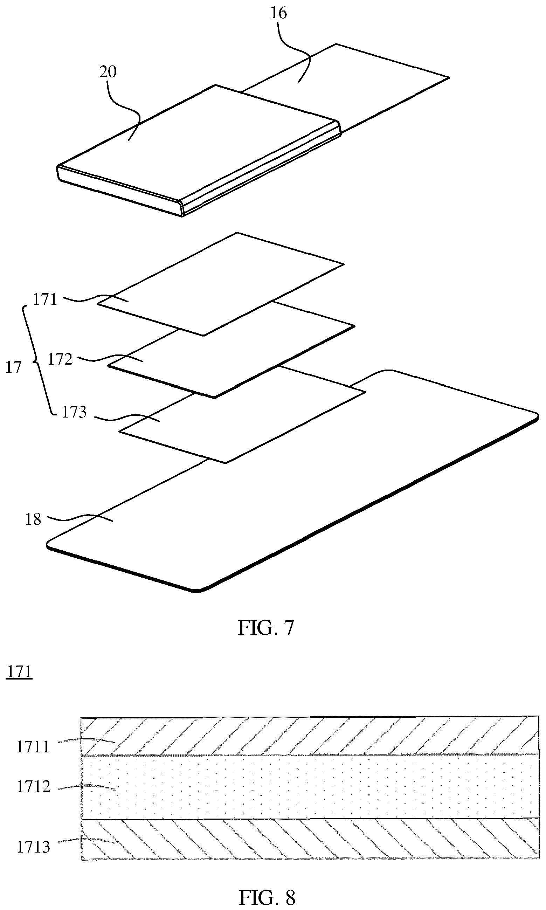

As shown in FIG. 7, the auxiliary material 17 includes an adhesive layer 171, a foam layer 172, and a double-sided tape layer 173. The three layers are stacked and bonded to form a sheet structure, and the foam layer 172 is sandwiched between the adhesive layer 171 and the double-sided tape layer 173. Shapes of the adhesive layer 171, the foam layer 172, and the double-sided tape layer 173 are consistent, and the adhesive layer 171, the foam layer 172, and the double-sided tape layer 173 completely overlap. The adhesive layer 171 is close to the battery 20, and the adhesive layer 171 is bonded to the charging coil 16. The double-sided tape layer 173 is close to the rear housing 18, and the double-sided tape layer 173 is bonded to the rear housing 18.

As shown in FIG. 8, the adhesive layer 171 may include a weak-adhesion layer 1711, a substrate layer 1712, and a strong-adhesion layer 1713 that are stacked and bonded. Both the weak-adhesion layer 1711 and the strong-adhesion layer 1713 are adhesive. With reference to FIG. 7 and FIG. 8, the weak-adhesion layer 1711 is bonded to the charging coil 16, the strong-adhesion layer 1713 is bonded to the foam layer 172, and the substrate layer 1712 is sandwiched between the weak-adhesion layer 1711 and the strong-adhesion layer 1713.

The weak-adhesion layer 1711 may be, for example, made from silica gel. The substrate layer 1712 may be, for example, made from polyethylene terephthalate (polyethylene terephthalate, PET) or poly-ether-ether-ketone (poly-ether-ether-ketone, PEEK). The strong-adhesion layer 1713 may be made from, for example, an acrylic double-sided tape, an acrylic tape, or a foam tape.

Adhesion of the weak-adhesion layer 1711 may be less than adhesion of the strong-adhesion layer 1713. The adhesion can be represented by adhesive force. The adhesive force may be defined and measured in the following manner: In a test environment, a sample of an adhesive material is bonded to a target surface, the sample is lifted and reflexed by 180 degrees, and then the sample is pulled to be peeled off the target surface. In this process, pulling force of pulling the sample is measured. When a peeling distance reaches a specified value, measured maximum pulling force is the adhesive force of the sample. A unit of the adhesive force may be N/cm, and this indicates that corresponding adhesive force when the pulling distance is 1 cm is 1 N. In Embodiment 1, the adhesive force of the weak-adhesion layer 1711 is less than or equal to 0.0392 N/cm, and/or the adhesive force of the strong-adhesion layer 1713 is greater than or equal to 5 N/cm. Certainly, specific values of the adhesive force of the weak-adhesion layer 1711 and the adhesive force of the strong-adhesion layer 1713 may be designed as required, and are not limited to those limited above.

The adhesive force of the weak-adhesion layer 1711 is also less than adhesive force of the double-sided tape layer 173. In other words, in the weak-adhesion layer 1711, the strong-adhesion layer 1713, and the double-sided tape layer 173, the weak-adhesion layer 1711 has weakest adhesive force. A relationship between the adhesive force of the strong-adhesion layer 1713 and the adhesive force of the double-sided tape layer 173 may be not limited. For example, the adhesive force of the strong-adhesion layer 1713 and the adhesive force of the double-sided tape layer 173 may be basically consistent; the adhesive force of the strong-adhesion layer 1713 is less than the adhesive force of the double-sided tape layer 173; or the adhesive force of the strong-adhesion layer 1713 is greater than the adhesive force of the double-sided tape layer 173.

In a thickness direction, materials in three material layers, namely, the weak-adhesion layer 1711, the strong-adhesion layer 1713, and the double-sided tape layer 173, are uniformly distributed, and adhesive force of any cross section whose normal line extends in the thickness direction is equal to adhesive force of an entire material layer. Therefore, adhesive force of a surface that is of the weak-adhesion layer 1711 and that is away from the substrate layer 1712 (that is, a surface away from the foam layer 172) is equal to the adhesive force of the weak-adhesion layer 1711, adhesive force of a surface that is of the strong-adhesion layer 1713 and that is away from the substrate layer 1712 is equal to the adhesive force of the strong-adhesion layer 1713, and adhesive force of a surface that is of the double-sided tape layer 173 and that is away from the foam layer 172 is equal to the adhesive force of the double-sided tape layer 173. The surface that is of the weak-adhesion layer 1711 and that is away from the substrate layer 1712 may be referred to as a weak-adhesion surface, and the surface that is of the double-sided tape layer 173 and that is away from the foam layer 172 may be referred to as a strong-adhesion surface.

As a whole, the adhesive layer 171 may further have specific damping performance, and can absorb impact energy, to have a specific function of suppressing vibration of the housing. The damping performance may be represented by the impact absorptivity. The impact absorptivity represents a ratio of energy absorbed by a material to total energy. Impact absorptivity of the adhesive layer 171 may be, for example, greater than or equal to 35%. Certainly, the adhesive layer 171 is relatively thin, and therefore does not have an outstanding damping effect. Actually, the damping effect of the adhesive layer 171 is not indispensable.

In another embodiment, the adhesive layer 171 is not limited to the foregoing stacked structure. For example, a single adhesive layer 171 may be manufactured by using a corresponding process, and two opposite sides of the single layer have different adhesion.

The foam layer 172 is made of foam. In terms of material selection, the foam used by the foam layer 172 includes but is not limited to polypropylene (polypropylene, PP) foam, polyethylene (polyethylene, PE) foam, polyurethane (polyurethane, PU) foam, and the like. In terms of a foaming characteristic and a structure, the foam used by the foam layer 172 may be open-hole foam (foam holes of a foam material are connected to each other) or closed-hole foam (foam holes of a foam material are not connected to each other). The foregoing descriptions are merely examples. Actually, another type of foam may be used according to a product requirement. This is not limited in Embodiment 1.

The foam layer 172 is easily compressed to generate elastic deformation and compression rebound force. When the auxiliary material 17 is assembled between the charging coil 16 and the rear housing 18, the foam layer 172 is compressed to generate compression rebound force, and the compression rebound force may enable the auxiliary material 17 to apply pre-tightening force to the rear housing 18, to suppress vibration of the rear housing 18. In addition, a deformable characteristic of the foam layer 172 can adapt to a gap tolerance between the battery 20 and the rear housing 18, to ensure reliable assembly of the battery 20 and the rear housing 18. In particular, when the battery 20 is an expandable pouch cell battery 20, the foam layer 172 can provide, based on a compressible characteristic of the foam layer 172, structural space required for expansion of the battery 20 (as described below). Lower density of the foam layer 172 leads to a larger possibility of compressive deformation of the foam layer 172 and lower compression rebound force that can be provided. In Embodiment 1, the density of the foam layer 172 may be relatively low, for example, is less than or equal to 100 Kg/m³ (a typical value may be 50 Kg/m³ or 100 Kg/m³). This can avoid a case in which the rear housing 18 is lifted and consequently a gap between the rear housing 18 and the middle frame 12 is excessively large because compression rebound force of the foam layer 172 is excessively large.

The double-sided tape layer 173 is made of a double-sided tape. According to a product requirement, any proper double-sided tape may be used to manufacture the double-sided tape layer 173. Both two opposite sides in a thickness direction of the double-sided tape layer 173 have relatively strong adhesion.

In a process of assembling the electronic device 10, the double-sided tape layer 173 of the auxiliary material 17 may be bonded to the rear housing 18 in advance to form the rear housing assembly, and then the rear housing assembly covers the middle frame 12 (the battery 20, the charging coil 16, the graphite sheet 15, the circuit board assembly, the speaker box 19, and the like are mounted on the middle frame 12 in advance), so that the weak-adhesion layer 1711 of the auxiliary material 17 is bonded to the charging coil 16. In this case, the foam layer 172 in the auxiliary material 17 may be compressed and deformed.

Because the rear housing 18 is bonded to the charging coil inside the rear housing 18 by using the auxiliary material 17, equivalent quality and rigidity of the rear housing 18 are increased, and resonance frequency of the rear housing 18 is changed. Therefore, when an air flow caused by working of the speaker box 19 impacts the rear housing 18, the rear housing 18 is not prone to vibration. Further, the foam layer 172 in the auxiliary material 17 can generate compression rebound force during compressive deformation, so that the auxiliary material 17 applies pre-tightening force to the rear housing 18. Under the pre-tightening force, the rear housing 18 is supported, and therefore is not prone to vibration under the impact of the air flow. Therefore, vibration of the rear housing 18 can be better suppressed under a joint action of integrated bonding and the pre-tightening force.

It may be learned from the foregoing descriptions that, from a perspective of suppressing vibration of the rear housing 18, in another embodiment, the auxiliary material 17 may have no foam layer 172 but only an adhesive material, provided that the adhesive material binds the rear housing 18 to the charging coil 16 inside the rear housing 18 to suppress vibration of the rear housing 18. However, the adhesive material does not have a compressive deformation capability, and cannot meet an assembly requirement. In contrast, the foam layer 172 enables the auxiliary material 17 to be compressed and deformed to meet the assembly requirement. This is described in detail below.

Because the foam is prone to elastic deformation, the auxiliary material 17 also has elastic deformation performance. When a gap tolerance between the battery 20 and the rear housing 18 exceeds a design range due to a manufacturing error, the auxiliary material 17 can be adaptively deformed to pad a gap between the battery 20 and the rear housing 18, to ensure that the battery 20 and the rear housing 18 can be reliably assembled; in other words, the auxiliary material 17 can adapt to the gap tolerance between the battery 20 and the rear housing 18. In particular, when the battery 20 is an expandable pouch cell battery, the auxiliary material 17 can be compressed to provide structural space required for expansion of the battery 20, to avoid a case in which the rear housing 18 is lifted after the battery 20 is expanded and consequently the gap between the rear housing 18 and the middle frame 12 is excessively large and an appearance defect of an entire system is caused. Because neither the adhesive layer 171 nor the double-sided tape layer 173 has a compressive deformation capability, it is necessary to dispose the foam layer 172 in the auxiliary material 17 from a perspective of ensuring a structure gap and meeting the assembly requirement.

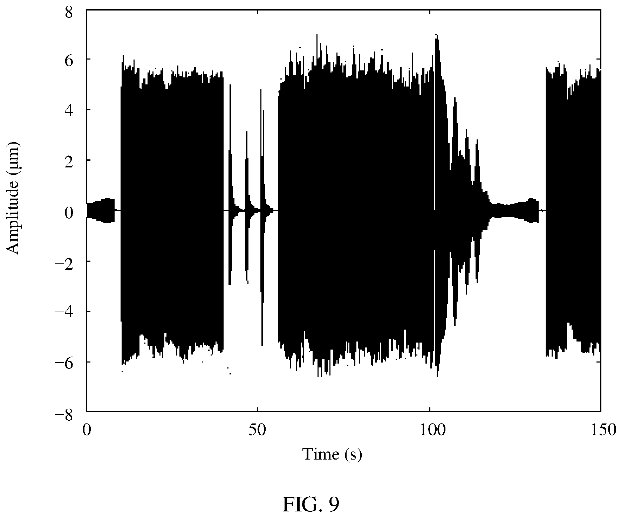

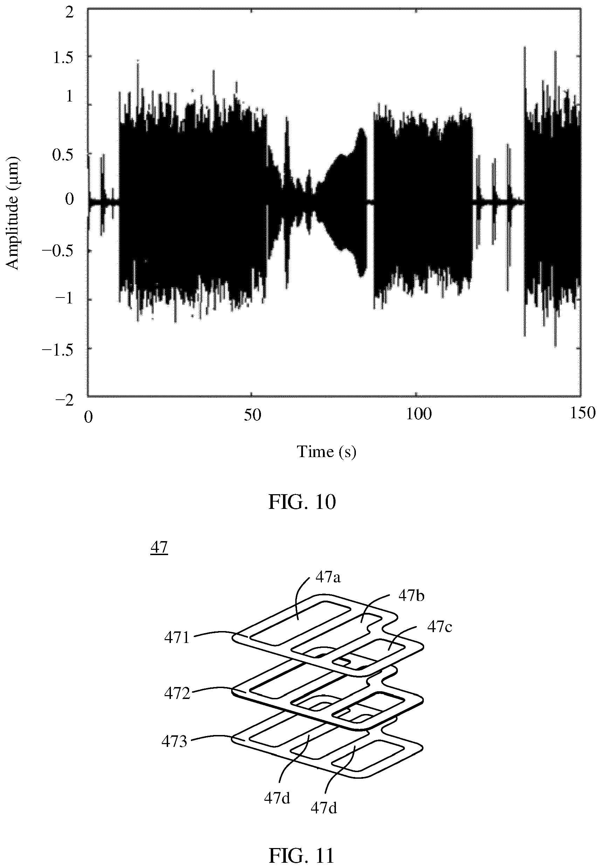

In a conventional solution, vibration of the housing is suppressed only by bonding foam on the rear housing 18, but an effect of suppressing vibration of the housing is relatively poor. FIG. 9 and FIG. 10 respectively show amplitude data of the rear housing 18 measured by using the conventional solution and the solution of Embodiment 1 under a same test sound source condition. It can be learned from comparison between FIG. 9 and FIG. 10 that in the conventional solution, amplitude of the rear housing 18 is obviously slightly larger, and the amplitude may reach approximately 6 µm; and this indicates that vibration of the rear housing 18 is relatively strong. In contrast, amplitude of the rear housing 18 in the solution of Embodiment 1 is merely approximately 1.5 µm; and this indicates that the amplitude of the rear housing 18 is significantly suppressed.

In addition, in the conventional solution, it is relatively difficult to choose a type of the foam. Foam that cannot easily be compressed or deformed and that provides excessively large compression rebound force during compressive deformation cannot be selected, and foam that can easily be compressed and deformed and that provides excessively small compression rebound force during compressive deformation cannot be selected. The former easily lifts the rear housing 18, and consequently the gap between the rear housing 18 and the middle frame 12 is excessively large. The latter cannot provide sufficient pre-tightening force, and an effect of suppressing vibration of the housing is limited. On the contrary, in the solution of Embodiment 1, a design of a combination of the adhesive layer 171, the double-sided tape layer 173, and the foam layer 172 is used, and may suppress vibration of the housing mainly in an integrated bonding manner, and contribution of the foam layer 172 to suppression of vibration of the housing is secondary. Therefore, any proper foam may be selected according to a requirement (for example, low-density foam may be selected to ensure the gap between the rear housing 18 and the middle frame 12). In this way, difficulty in choosing the type of the foam is reduced, and productivity is improved.

In addition, because the adhesive force of the weak-adhesion layer 1711 in the adhesive layer 171 is the smallest, when the rear housing 18 is detached for maintenance, the weak-adhesion layer 1711 is easily separated from the charging coil 16, and the double-sided tape layer 173 is still bonded to the rear housing 18, so that the entire auxiliary material 17 is detached together with the rear housing 18. In a detaching operation, the charging coil 16 is not pulled or damaged, and no glue remains on the charging coil 16. This not only reduces detaching difficulty, but also facilitates reuse of the charging coil 16. In other words, a surface on which the auxiliary material 17 is bonded to the rear housing 18 has relatively strong adhesion, and a surface on which the auxiliary material 17 is bonded to the charging coil 16 has relatively weak adhesion, so that a detachable maintenance feature of a product can be improved.

In conclusion, the solution of Embodiment 1 can not only suppress vibration of the rear housing 18, but can also meet the product assembly requirement and improve the productivity and the detachable maintenance feature of a product.

Based on the foregoing descriptions, in another embodiment, the auxiliary material 17 can bind the rear housing 18 to any other functional component, to implement technical solutions of suppressing vibration of the housing, adapting to the assembly gap, reducing difficulty in choosing the type of the foam, and improving the detachable maintenance feature. For example, the graphite sheet 15 and the charging coil 16 are not disposed for the electronic device, and the auxiliary material 17 binds the rear housing 18 to the battery 20; or the electronic device has the graphite sheet 15 but does not have the charging coil 16, and the auxiliary material 17 binds the rear housing 18 to the graphite sheet 15; or the auxiliary material 17 is disposed in an area in which the shielding case is located, and the auxiliary material 17 binds the rear housing 18 to the shielding case.

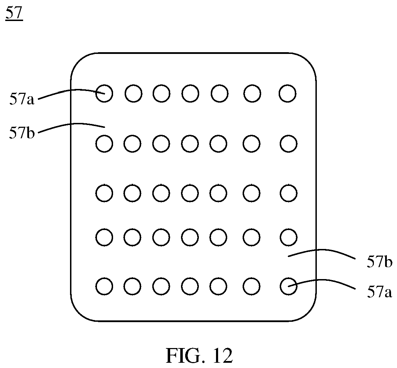

As shown in FIG. 11 and FIG. 12, in Embodiment 3, different from Embodiment 1, several spaced-apart through-holes may be disposed on the auxiliary material, and an axial line of each through-hole may be in a thickness direction of the auxiliary material; in other words, each through-hole penetrates the adhesive layer, the foam layer, and the double-sided tape layer. Sizes, quantities, shapes, and an arrangement manner of the through-holes are not limited. For example, as shown in FIG. 11, a through-hole 47a, a through-hole 47b, and a through-hole 47c on an auxiliary material 47 all penetrate an adhesive layer 471, a foam layer 472, and a double-sided tape layer 473. The through-hole 47a and the through-hole 47c are approximately in a rectangular shape, and the through-hole 47b is a special-shaped hole. Sizes of the three through-holes are different, and a vimineous fillet 47d is formed between adjacent through-holes. For another example, as shown in FIG. 12, all through-holes 57a on the auxiliary material 57 may be distributed in a matrix, all the through-holes 57a have a same hole diameter and are circular holes, and a spacing part 57b is formed between adjacent through-holes 57a.

Compared with a structure of the auxiliary material in Embodiment 1, in Embodiment 3, the through-hole is disposed on the auxiliary material, so that an area in which the auxiliary material is bonded to the rear housing 18 and the charging coil 16 can be reduced, and adhesive force of the auxiliary material and compression rebound force (that is, pre-tightening force) applied by the auxiliary material to the rear housing 18 are reduced. In this way, the rear housing 18 can be more easily detached, and a gap between the rear housing 18 and the middle frame 12 is prevented from being excessively large. It should be understood that, in a solution of Embodiment 3, adhesive force and pre-tightening force of the auxiliary material are adjusted according to a product requirement while vibration of the rear housing 18 is suppressed, an assembly requirement of a product is met, and productivity and the detachable maintenance feature of the product are improved.

The foregoing descriptions are merely specific implementations of this application, but are not intended to limit the protection scope of this application. Therefore, the protection scope of this application shall be subject to the protection scope of the claims.

## Claims

1. An electronic device (10, 30), comprising:
a rear housing (18, 311, 331), a middle frame (12, 312, 332), a functional component, a speaker box (19), and an auxiliary material (17), wherein the rear housing covers the middle frame and forms a mounting cavity (10a) together with the middle frame, the functional component, the speaker box, and the auxiliary material are all disposed in the mounting cavity, the functional component is adjacent to the speaker box, a rear acoustic cavity (B) of the speaker box is connected to the mounting cavity, the auxiliary material is bonded between the rear housing and the functional component,
**characterized in that**:
the auxiliary material has a weak-adhesion surface and a strong-adhesion surface that are opposite to each other, adhesive force of the weak-adhesion surface is less than adhesive force of the strong-adhesion surface, the weak-adhesion surface is bonded to the functional component, and the strong-adhesion surface is bonded to the rear housing.

2. The electronic device (10, 30) according to claim 1, wherein
the auxiliary material (17) comprises an adhesive layer (171), a foam layer (172), and a double-sided tape layer (173) that are sequentially stacked, the adhesive layer is bonded to the functional component, the weak-adhesion surface is a surface on which the adhesive layer is bonded to the functional component, the double-sided tape layer is bonded to the rear housing (18, 311, 331), and the strong-adhesion surface is a surface on which the double-sided tape layer is bonded to the rear housing.

3. The electronic device (10, 30) according to claim 2, wherein
the adhesive layer (171) comprises a weak-adhesion layer (1711), a substrate layer (1712), and a strong-adhesion layer (1713) that are sequentially stacked; and
the weak-adhesion layer is bonded to the functional component, the weak-adhesion surface is a surface on which the weak-adhesion layer is bonded to the functional component, the strong-adhesion layer is bonded to the foam layer (172), and the adhesive force of the weak-adhesion surface is less than adhesive force of the strong-adhesion layer.

4. The electronic device (10, 30) according to claim 3, wherein
adhesive force of the weak-adhesion layer (1711) is less than or equal to 0.0392 N/cm, and/or the adhesive force of the strong-adhesion layer (1713) is greater than or equal to 5 N/cm.

5. The electronic device (10, 30) according to claim 3 or 4, wherein
the weak-adhesion layer (1711) is made from silica gel, the substrate layer (1712) is made from polyethylene terephthalate or poly-ether-ether-ketone, and the strong-adhesion layer (1713) is made from an acrylic double-sided tape, an acrylic tape, or a foam tape.

6. The electronic device (10, 30) according to any one of claims 1 to 5, wherein
impact absorptivity of the adhesive layer (17) is greater than or equal to 35%.

7. The electronic device (10, 30) according to any one of claims 1 to 6, wherein
density of the foam layer (172) is less than or equal to 100 Kg/m³.

8. The electronic device (10, 30) according to any one of claims 1 to 7, wherein
several spaced-apart through-holes (47a-c, 57a) are disposed on the auxiliary material, and each through-hole penetrates the adhesive layer (171), the foam layer (172), and the double-sided tape layer (173).

## Patentansprüche

1. Elektronische Vorrichtung (10, 30), umfassend:
ein hinteres Gehäuse (18, 311, 331), einen mittleren Rahmen (12, 312, 332), ein Funktionsbauteil, eine Lautsprecherbox (19) und ein Hilfsmaterial (17), wobei das hintere Gehäuse den mittleren Rahmen abdeckt und mit dem mittleren Rahmen einen Montagehohlraum (10a) bildet, das Funktionsbauteil, die Lautsprecherbox und das Hilfsmaterial alle in dem Montagehohlraum angeordnet sind, das Funktionsbauteil mit der Lautsprecherbox benachbart ist, ein hinterer Schallhohlraum (B) der Lautsprecherbox mit dem Montagehohlraum verbunden ist, das Hilfsmaterial zwischen dem hinteren Gehäuse und dem Funktionsbauteil verklebt ist,
**dadurch gekennzeichnet, dass**:
das Hilfsmaterial eine schwach haftende Oberfläche und eine stark haftende Oberfläche aufweist, die einander gegenüberliegen, wobei die Haftkraft der schwach haftenden Oberfläche geringer ist als die Haftkraft der stark haftenden Oberfläche, wobei die schwach haftende Oberfläche mit dem Funktionsbauteil verbunden ist und wobei die stark haftende Oberfläche mit dem hinteren Gehäuse verbunden ist.

2. Elektronische Vorrichtung (10, 30) nach Anspruch 1, wobei
das Hilfsmaterial (17) eine Klebstoffschicht (171), eine Schaumstoffschicht (172) und eine doppelseitige Klebebandschicht (173) umfasst, die aufeinander gestapelt sind, wobei die Klebstoffschicht mit dem Funktionsbauteil verklebt ist, die schwach haftende Oberfläche eine Oberfläche ist, auf der die Klebstoffschicht mit dem Funktionsbauteil verklebt ist, die doppelseitige Klebebandschicht mit dem hinteren Gehäuse (18, 311, 331) verklebt ist und die stark haftende Oberfläche eine Oberfläche ist, auf der die doppelseitige Klebebandschicht mit dem hinteren Gehäuse verklebt ist.

3. Elektronische Vorrichtung (10, 30) nach Anspruch 2, wobei
die Klebstoffschicht (171) eine schwach haftende Schicht (1711), eine Substratschicht (1712) und eine stark haftende Schicht (1713) umfasst, die aufeinander gestapelt sind; und
die schwach haftende Schicht mit dem Funktionsbauteil verklebt ist, die stark haftende Oberfläche eine Oberfläche ist, auf der die schwach haftende Schicht mit dem Funktionsbauteil verklebt ist, die stark haftende Schicht mit der Schaumstoffschicht (172) verklebt ist und die Haftkraft der schwach haftenden Oberfläche geringer ist als die Haftkraft der stark haftenden Schicht.

4. Elektronische Vorrichtung (10, 30) nach Anspruch 3, wobei
die Haftkraft der schwach haftenden Schicht (1711) kleiner oder gleich 0,0392 N/cm ist und/oder die Haftkraft der stark haftenden Schicht (1713) größer oder gleich 5 N/cm ist.

5. Elektronische Vorrichtung (10, 30) nach Anspruch 3 oder 4, wobei
die schwach haftende Schicht (1711) aus Silicagel ist, die Substratschicht (1712) aus Polyethylenterephthalat oder Polyetheretherketon und die stark haftende Schicht (1713) aus einem doppelseitigen Acrylband, einem Acrylband oder einem Schaumstoffband hergestellt ist.

6. Elektronische Vorrichtung (10, 30) nach einem der Ansprüche 1 bis 5, wobei
die Stoßdämpfung der Klebstoffschicht (17) größer oder gleich 35 % ist.

7. Elektronische Vorrichtung (10, 30) nach einem der Ansprüche 1 bis 6, wobei
die Dichte der Schaumstoffschicht (172) kleiner oder gleich 100 kg/m³ ist.

8. Elektronische Vorrichtung (10, 30) nach einem der Ansprüche 1 bis 7, wobei
auf dem Hilfsmaterial mehrere voneinander beabstandete Durchgangslöcher (47a-c, 57a) angeordnet sind, die jeweils die Klebstoffschicht (171), die Schaumstoffschicht (172) und die doppelseitige Klebebandschicht (173) durchdringen.

## Revendications

1. Dispositif électronique (10, 30), comprenant :
un boîtier arrière (18, 311, 331), un cadre intermédiaire (12, 312, 332), un composant fonctionnel, une enceinte de haut-parleur (19) et un matériau auxiliaire (17), dans lequel le boîtier arrière recouvre le cadre intermédiaire et forme une cavité de montage (10a) avec le cadre intermédiaire, le composant fonctionnel, l'enceinte de haut-parleur et le matériau auxiliaire sont tous disposés dans la cavité de montage, le composant fonctionnel est adjacent à l'enceinte de haut-parleur, une cavité acoustique arrière (B) de l'enceinte de haut-parleur est reliée à la cavité de montage, le matériau auxiliaire est collé entre le boîtier arrière et le composant fonctionnel,
**caractérisé en ce que** :
le matériau auxiliaire présente une surface à faible adhésion et une surface à forte adhésion qui sont opposées l'une à l'autre, la force adhésive de la surface à faible adhésion est inférieure à la force adhésive de la surface à forte adhésion, la surface à faible adhésion est collée au composant fonctionnel et la surface à forte adhésion est collée au boîtier arrière.

2. Dispositif électronique (10, 30) selon la revendication 1, dans lequel
le matériau auxiliaire (17) comprend une couche adhésive (171), une couche de mousse (172) et une couche de ruban adhésif double face (173) qui sont empilées séquentiellement, la couche adhésive est collée au composant fonctionnel, la surface à faible adhésion est une surface sur laquelle la couche adhésive est collée au composant fonctionnel, la couche de ruban adhésif double face est collée au boîtier arrière (18, 311, 331), et la surface à forte adhésion est une surface sur laquelle la couche de ruban adhésif double face est collée au boîtier arrière.

3. Dispositif électronique (10, 30) selon la revendication 2, dans lequel
la couche adhésive (171) comprend une couche à faible adhésion (1711), une couche de substrat (1712) et une couche à forte adhésion (1713) qui sont empilées séquentiellement ; et
la couche à faible adhésion est collée au composant fonctionnel, la surface à faible adhésion est une surface sur laquelle la couche à faible adhésion est collée au composant fonctionnel, la couche à forte adhésion est collée à la couche de mousse (172), et la force adhésive de la surface à faible adhésion est inférieure à la force adhésive de la couche à forte adhésion.

4. Dispositif électronique (10, 30) selon la revendication 3, dans lequel
la force adhésive de la couche à faible adhésion (1711) est inférieure ou égale à 0,0392 N/cm, et/ou la force adhésive de la couche à forte adhésion (1713) est supérieure ou égale à 5 N/cm.

5. Dispositif électronique (10, 30) selon la revendication 3 ou 4, dans lequel
la couche à faible adhésion (1711) est constituée de gel de silice, la couche de substrat (1712) est constituée de poly(téréphtalate d'éthylène) ou de polyéther-éther-cétone, et la couche à forte adhésion (1713) est constituée d'un ruban adhésif double face acrylique, d'un ruban acrylique ou d'un ruban mousse.

6. Dispositif électronique (10, 30) selon l'une quelconque des revendications 1 à 5, dans lequel
l'absorptivité d'impact de la couche adhésive (17) est supérieure ou égale à 35 %.

7. Dispositif électronique (10, 30) selon l'une quelconque des revendications 1 à 6, dans lequel
la masse volumique de la couche de mousse (172) est inférieure ou égale à 100 kg/*m*³.

8. Dispositif électronique (10, 30) selon l'une quelconque des revendications 1 à 7, dans lequel
plusieurs trous traversants espacés (47a-c, 57a) sont disposés sur le matériau auxiliaire, et chaque trou traversant pénètre dans la couche adhésive (171), la couche de mousse (172) et la couche de ruban adhésif double face (173).
